# EUROPÄISCHE PATENTSCHRIFT

(11) **EP 1 460 207 B1**
(45) Veröffentlichungstag und Bekanntmachung des Hinweises auf die Patenterteilung: **15.08.2007**
(21) Anmeldenummer: 04005371.2
(22) Anmeldetag: 06.03.2004
(51) Int. Cl.: E05B 19/04, A44C 5/00, A45F 5/00

(54) **An einem Halteband befestigbarer Schlüssel**
Key attachable to a strap
Clé attachable à une sangle

(30) Priorität: 18.03.2003 DE 10311884
(43) Veröffentlichungstag der Anmeldung: 22.09.2004
(60) Teilanmeldung: 06116708.6
(73) Patentinhaber: Schulte-Schlagbaum Aktiengesellschaft, 42553 Velbert (DE)
(72) Erfinder: Geiger, Diethard, 42551 Velbert (DE); Scheffler, Matthias, 42489 Wülfrath (DE)
(74) Vertreter: Grundmann, Dirk

(56) Entgegenhaltungen:
- FR-A- 2 722 959
- GB-A- 769 149
- GB-A- 1 466 533
- US-A- 5 489 051

## Beschreibung

Die Erfindung betrifft einen an einem Halteband oder dergleichen befestigbaren Schlüssel, welcher Schlüssel ein Griffstück aufweist, welches Griffstück über einen Verbindungssteg dreh- und schwenkbar an einem Verbindungsstück zum Halteband angelenkt ist.

Ein gattungsgemäßer Schlüssel ist aus der GB 1466 533 bekannt. Derartige Schlüssel werden insbesondere in Badeanstalten verwendet. Ein schnallenartig gestaltetes Verbindungsstück wird von einem Halteband durchsetzt. Vom Steg des schnallenartigen Verbindungsstücks geht ein zapfenartiger Verbindungssteg aus, der in eine gabelförmige Öffnung des Griffstücks eintaucht und dort über einen die Gabelschenkel sowie den Verbindungssteg durchsetzenden Querzapfen festgelegt ist. Da der Verbindungssteg selbst drehbar zum Verbindungsstück angeordnet ist und auch das Griffstück um den Querzapfen zu schwenken vermag, ist eine allseitige Dreh- und Schwenkbarkeit des Schlüssels zum Halteband gegeben.

Dem Gegenstand der Erfindung liegt die Aufgabe zugrunde, einen gattungsgemäßen an einem Halteband oder dergleichen festlegbaren Schlüssel gebrauchsvorteilhaft auszugestalten derart, dass bei einer Reduzierung der Bauteile auf ein Minimum eine vereinfachte Montage ermöglicht ist.

Diese Aufgabe ist zunächst und im Wesentlichen bei einem Schlüssel mit den Merkmalen des Anspruches 1 gelöst, wobei darauf abgestellt ist, dass der Verbindungssteg endseitig einen Kugelkopf ausgebildet, der formschlüssig in einer vom Griffstück gebildeten Kugelpfanne einliegt.

Die Gegenstände der weiteren Ansprüche sind nachstehend in Bezug zu dem Gegenstand des Anspruches 1 erläutert, können aber auch in ihrer unabhängigen Formulierung von Bedeutung sein.

Zufolge derartiger Ausgestaltung ist ein Schlüssel der in Rede stehenden Art von erhöhtem Gebrauchswert geschaffen, welcher zudem eine einfache Montage zwischen Verbindungsstück und Griffstück gestattet. Es ist nicht mehr erforderlich, den Verbindungssteg drehbar dem Verbindungsstück zuzuordnen. Der vom Verbindungsstück ausgehende Verbindungssteg formt endseitig nun den Kugelkopf, welcher bei einfacher Montage in die Kugelpfanne des Griffstückes einsetzbar ist. Ein gesonderter Querstift, welcher den Verbindungssteg und das Griffstück durchgreift, ist nicht mehr notwendig. Die Verbindung zwischen Verbindungssteg und Griffstück durch ein Kugelgelenk verleiht sodann dem Schlüssel eine verbesserte Dreh- und Schwenkbarkeit zum am Halteband festgelegten Verbindungsstück. Es ist möglich, die Kugelgelenk-Verbindung durch Verrasten herbeizuführen. Das Aufheben der Verbindung würde dann jedoch das Überwinden einer größeren Rastkraft verlangen, was willensbetont geschehen müsste und den Einsatz von Werkzeugen verlangt. Jedoch ist gemäß der Erfindung auch eine Montage möglich, welche ohne Verrastung der Kugelgelenk-Verbindung auskommt. Hierzu ist erfindungsgemäß vorgesehen, dass der Formschluss über ein in einen Einsteckfreiraum der Kugelpfanne verlagerbares Verriegelungselement erzielt ist. Ohne eine Rastkraft zu überwinden, kann der Kugelkopf in die Kugelpfanne eingelegt werden. Anschließend ist das griffstückseitige Verriegelungselement in den Einsteckfreiraum der Kugelpfanne zu verlagern unter Sicherung des Formschlusses zwischen Kugelpfanne und Kugelkopf. Dann können Verbindungsstück und Schlüssel nicht mehr voneinander getrennt werden, es sei denn, dass zuvor das Verriegelungselement aus seiner Formschlusslage bewegt wird. Mit Vorteil ist dabei das Verriegelungselement als Schieber gestaltet, welcher innerhalb des Griffstückes verlagerbar ist. Optimal erweist es sich dabei, dass der Schieber von einem in einen Einsteckschacht des Griffstückes eingesteckten Befestigungsabschnitt des Schlüsselblattes ausgebildet ist. Somit erfüllt dieses eine Doppelfunktion: Einerseits wird durch ihn der das Griffstück überragende Schließabschnitt und andererseits der Schieber durch den Befestigungsabschnitt gebildet. Mit dem Einsetzen des Befestigungsabschnittes in den Einsteckschacht des Griffstückes wird nach vorhergehendem Einbringen des Kugelkopfes in die Kugelpfanne der Formschluss erzielt. Eine solche Montage lässt sich daher kurzfristig und leicht bewerkstelligen, da auch kein spezielles Werkzeug benötigt wird. Die Verriegelungsrichtung ist nämlich die Einsteckrichtung des Befestigungsabschnittes in den Einsteckschacht des Griffstückes. Damit nach Einstecken des Befestigungsabschnittes des Schlüsselblattes in den Einsteckschacht das Schlüsselblatt nicht unbefugt herausziehbar ist, sind von der Befestigungsabschnitt-Schmalseite und der zugeordneten Wand des Einsteckschachtes ausgebildete Rast- und Gegenrastmittel vorgesehen zur Fesselung des Befestigungsabschnittes im Einsteckschacht. Weiterhin besteht ein vorteilhaftes Merkmal der Erfindung darin, dass die Kugelpfanne von einem gabelförmigen Endabschnitt des Griffstückes gebildet und das Verriegelungselement in die Gabelöffnung hinein verlagerbar ist. In der Nichtgebrauchsstellung des bspw. an dem Halteband befestigten Schlüssels kann das Griffstück so verschwenkt werden, dass der Verbindungssteg zwischen den Gabelschenkeln einliegt. In dieser Stellung ist auch das Schlüsselblatt in Richtung des Haltebandes abgeklappt. Es ist die Stellung, in welcher normalerweise der Schlüssel am Halteband getragen wird. Durch die Gabelöffnung wird auch der Freiraum gebildet, in welchen das Verriegelungselement unter Realisierung des Formschlusses eintauchen kann, und zwar mit der als Kehle gestalteten U-Öffnung. Um den Schlüssel unterschiedlich einsetzen zu können, bildet das Verbindungsstück ein Befestigungsauge oder eine mit Durchzugsöffnungen ausgestattete Schnalle aus. In letzterem Fall ist der Einsatz des Verbindungsstückes mit Schlüssel in Badeanstalten angestrebt. Ist das Verbindungsstück mit einem Befestigungsauge versehen, so kann der Schlüssel bspw. an einem Halsband getragen werden. Derartige Schlüssel dienen in der Regel dazu, ein Fach, Schrank etc. schließen bzw. öffnen zu können. Daher muss dem Benutzer angezeigt werden, welches Fach, Schrank etc. zu seinem Schlüssel gehört. Zu diesem Zweck ist erfindungsgemäß ein aus Schlüsselschaft und Griffstück bestehender Schlüssel vorgesehen, wobei ein Befestigungsabschnitt des Schlüsselblattes im Griffstück steckt und das Griffstück mit einer Kennzeichnung versehen ist. Um bspw. die Schlüssel einer Schließanlage mit den entsprechenden Kennzeichnungen günstig ausstatten zu können, ist die Kennzeichnung einer in eine Einfügeöffnung des Griffstückes einsetzbaren Kennzeichnungsplatte zugeordnet, welche Kennzeichnungsplatte ein Sichtfenster zur Breitfläche des Befestigungsabschnittes verschließt. Die Kennzeichnungsplatte dient einerseits dazu, den Schlüssel identifizieren und zuordnen zu können; anderseits deckt die Kennzeichnungsplatte das Sichtfenster zur Breitfläche des Befestigungsabschnittes ab. Bei nicht in die Einfügeöffnung eingesetzter Kennzeichnungsplatte kann dann bspw. die an dem Befestigungsabschnitt vorgesehene Schlüsselnummer festgestellt werden. Im Detail handelt es sich bezüglich der Einfügeöffnung um einen sich parallel zum Befestigungsschacht erstreckenden Schacht. Dies erlaubt es, das Griffstück hinsichtlich seiner Dimensionierung optimal zu nutzen. Weiterhin ist vorgesehen, dass die die Kennzeichnung tragende Breitseite der Kennzeichnungsplatte durch ein im Wesentlichen mit dem Sichtfenster fluchtendes Kennzeichnungsfenster sichtbar ist. Um auch bezüglich der Kennzeichnungsplatte einen Mißbrauch auszuschließen, sind von der Kennzeichnungsplatten-Schmalseite und der zugeordneten Wand des die Einfügeöffnung bildenden Schachtes ausgebildete Rast- und Gegenrastmittel vorgesehen zur Fesselung der Kennzeichnungsplatte in der Einfügeöffnung. Montagetechnisch günstig ist es, dass die Einsteckrichtung der Kennzeichnungsplatte quergerichtet zur Einsteckrichtung des Schlüsselblattes verläuft. Also wirkt der Schließabschnitt des Schlüsselblattes nicht störend bei der Montage. Vielmehr kann der Schließabschnitt noch dazu vorgesehen sein, den Schlüssel mit einer Hand bei der Montage halten zu können.

Hinsichtlich der Ausstattung einer größeren Anzahl von Schlüsseln mit Kennzeichnungsplatten ist ein von einem Rahmen gehaltener Satz von durchnummerierten Kennzeichnungsplatten vorgesehen, wobei die nebeneinander angeordneten Kennzeichnungsplatten mit Abrissstegen mit Rahmenschenkeln verbunden sind. Es können daher die jeweiligen benötigten Kennzeichnungsplatten nach Durchtrennen der Abrissstege dem Rahmen entnommen werden. Die verbleibenden Kennzeichnungsplatten sind unverlierbar dem Rahmen zugeordnet. Es muss stets ein willensbetontes Entnehmen der Kennzeichnungsplatten erfolgen. Um eine größere Anzahl von Kennzeichnungsplatten im Rahmen unterbringen zu können, bildet dieser mehrere Zwischenschenkel aus, an denen die zeilenartig angeordneten Kennzeichnungsplatten mit Abrissstegen verbunden sind.

Nachstehend wird ein Ausführungsbeispiel der Erfindung anhand der Zeichnungen erläutert. Es zeigt:
- Fig. 1: eine Draufsicht auf einen an einem Halteband befestigten Schlüssel,
- Fig. 2: die Ansicht gemäß Pfeilrichtung II in Fig. 1,
- Fig. 3: in stark vergrößerter Darstellung einen Längsschnitt durch den Schlüssel mit zugehörigem Verbindungsstück,
- Fig. 4: eine Draufsicht zu Fig. 3,

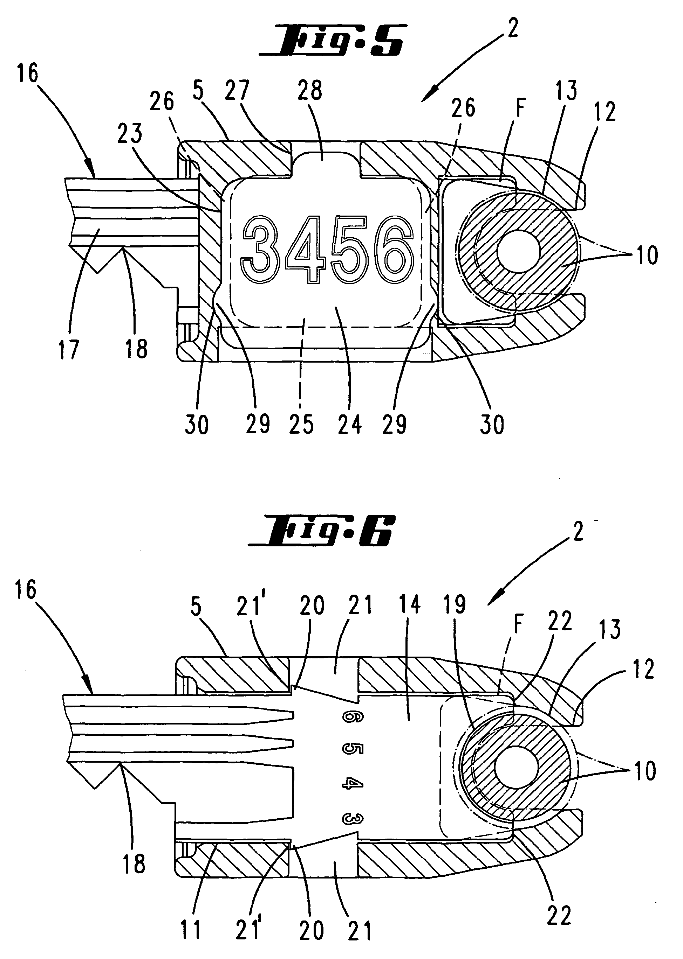

- Fig. 5: den Schnitt nach der Linie V-V in Fig. 3,
- Fig. 6: den Schnitt nach der Linie VI-VI in Fig. 3,
- Fig. 7: den Schnitt nach der Linie VII-VII in Fig. 3,
- Fig. 8: eine abgewandelte Ausgestaltung des Verbindungsstückes, welches ein Befestigungsauge ausbildet,
- Fig. 9: eine klappfigürliche Ansicht der Fig. 8,

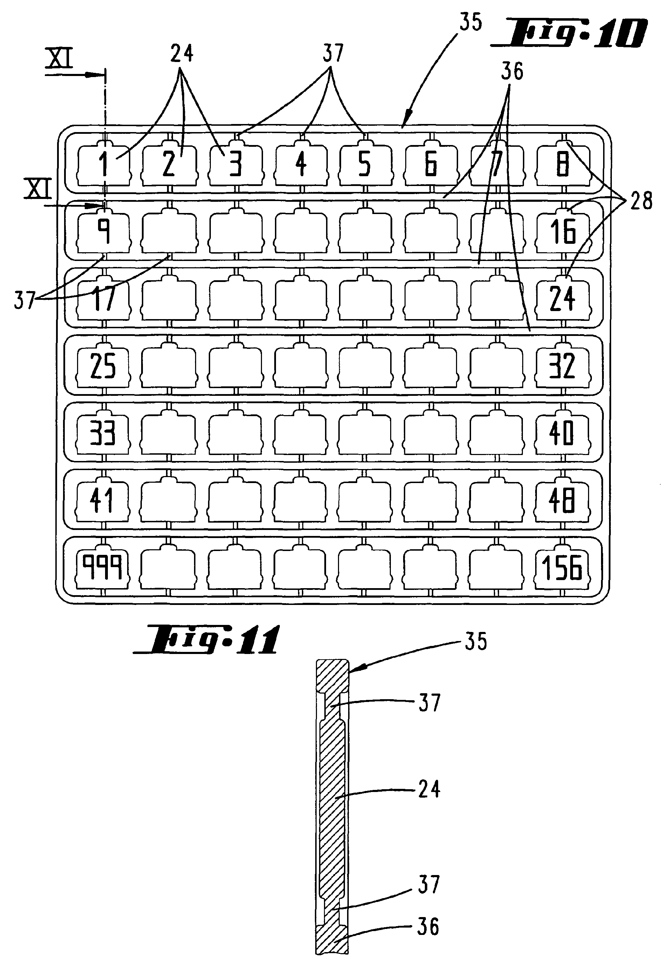

- Fig. 10: einen von einem Rahmen gehaltenen Satz durchnummerierter Kennzeichnungsplatten und
- Fig. 11: in stark vergrößerter Darstellung den Schnitt nach der Linie XI-XI in Fig. 10.

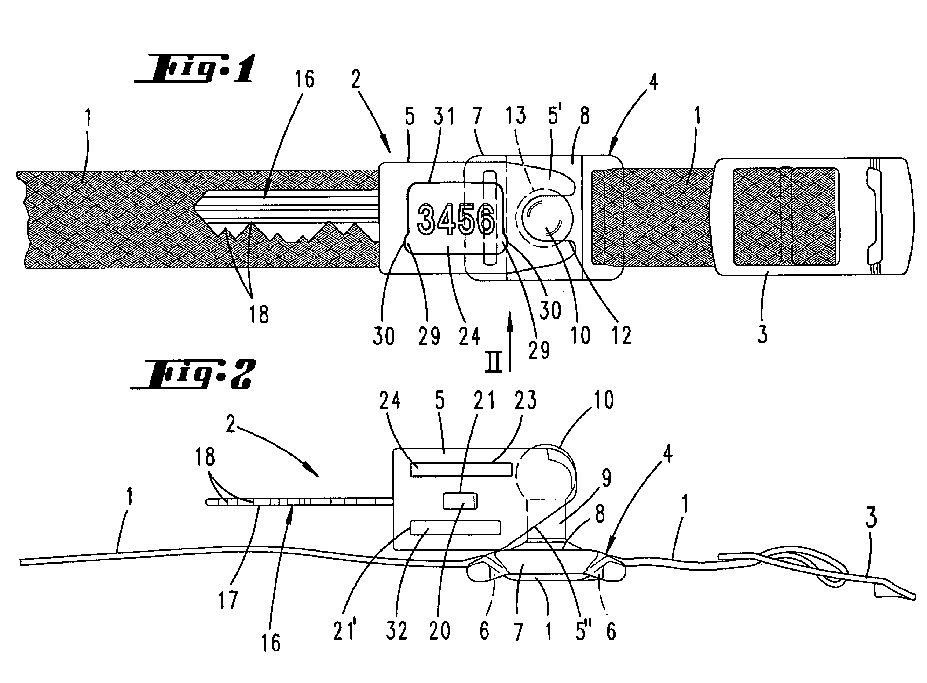

Gemäß Fig. 1 und 2 ist mit der Ziffer 1 ein Halteband bezeichnet. Dieses ist in Form eines Armbandes gestaltet. Das Halteband 1 dient zur Festlegung eines Schlüssels 2. Ein solches dargestelltes Halteband 1 mit Schlüssel 2 wird dem Besucher einer Badeanstalt ausgehändigt. Mittels des Schlüssels 2 kann er dann das Schloss eines Schließfaches oder einer Umkleidekabine betätigen. Anschließend wird das Halteband mit Schlüssel unverlierbar am Arm getragen, was bspw. mittels einer am einen Ende des Haltebandes 1 befestigten Schließe 3 vornehmbar ist.

Zur Festlegung des Schlüssels 2 dient ein Verbindungsstück 4, an welchem ein Griffstück 5 des Schlüssels 2 unverlierbar angeordnet ist. Das Verbindungsstück 4 formt eine mit Durchzugsöffnungen 6 ausgebildete Schnalle 7. Die Durchzugsöffnungen 6 befinden sich in stumpfwinklig von der Schnalle 7 abgewinkelten Endabschnitten. Die Durchzugsöffnungen 6 werden von dem Halteband 1 gemäß Darstellung nach Fig. 1 und 2 durchsetzt derart, dass die zwischen den Durchzugsöffnungen 6 verbleibende Länge des Haltebandes 1 unterhalb des Schnallensteges 8 verläuft. Hierdurch ist es möglich, das Verbindungsstück 4 relativ zum Halteband 1 zu verlagern und damit auch den Schlüssel 2.

Mittig geht von dem Schnallensteg 8 ein zapfenförmig gestalteter Verbindungssteg 9 aus, welcher endseitig einen Kugelkopf 10 ausbildet. Der Kugelkopf 10 ist in seinem Durchmesser größer als derjenige des Verbindungssteges 9, so dass der Kugelkopf 10 den Verbindungssteg 9 überragt. Verbindungssteg 9 mit Kugelkopf 10 sind materialeinheitlich gestaltet und bestehen aus Kunststoff. Das Fertigen des Verbindungsstückes 4 ist daher im Wege des Kunststoff-Spritzverfahrens möglich. Eine Ausbildung des Verbindungsstückes aus Metall wäre jedoch auch denkbar.

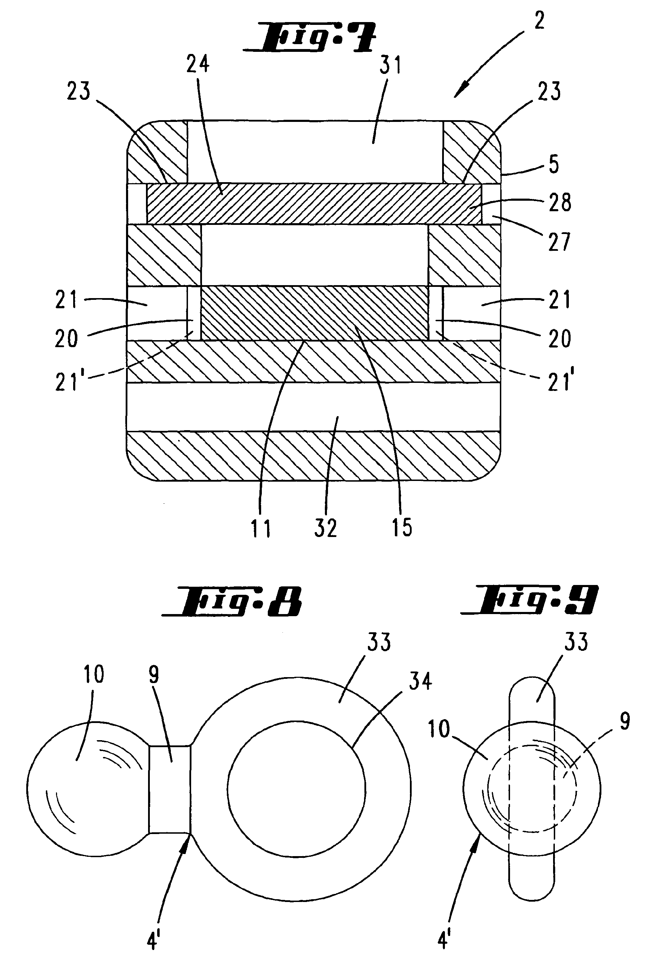

Das Griffstück 5 besitzt einen quadratischen Querschnitt, vergl. Fig. 7. Von der einen Stirnseite des Griffstückes 5 geht ein flacher Einsteckschacht 11 aus, wobei die Breitflächen des Schachtes 11 parallel zu den korrespondierenden Parallelflächen des Griffstückes 5 verlaufen. Der Einsteckschacht 11 erstreckt sich bis in einen gabelförmigen Endabschnitt 5' des Griffstückes 5 hinein. Innenseitig bilden die Gabelschenkel eine von der Gabelöffnung 12 gekreuzte Kugelpfanne 13. Deren Durchmesser ist etwas größer als der Durchmesser des Kugelkopfes 10, so dass sich dieser innerhalb der Kugelpfanne 13 leicht bewegen kann. Im Bereich der Kugelpfanne 13 hat die Gabelöffnung 12 eine Weite, welche etwas größer ist als der Durchmesser des Verbindungssteges 9. Das dem eingezogenen Ende der Gabelöffnung 12 gegenüberliegende Ende erweitert sich auf die Größe des Kugelkopf-Durchmessers. Demzufolge kann von diesem Ende her der Kugelkopf 10 behinderungsfrei in die Kugelpfanne 13 eingelegt werden. Zur Sicherung des einliegenden Zustandes des Kugelkopfes 10 dient ein Verriegelungselement 14. Dieses ragt in den von der Gabelöffnung 12 gebildeten Einsteckfreiraum F und führt zu einer formschlüssigen Einlagerung des Kugelkopfes 10 in der Kugelpfanne 13. Das bedeutet, dass der Kugelkopf 10 nicht die Kugelpfanne 13 verlassen kann. Jedoch kann das Griffstück 5 relativ zum Verbindungssteg 9 verdreht und verschwenkt werden.

Das vorgenannte Verriegelungselement 14 ist als Schieber gestaltet und von einem in den Einsteckschacht 11 des Griffstückes 5 eingeschobenen Befestigungsabschnitt 15 des Schlüsselblattes 16 ausgebildet. An den Befestigungsabschnitt 15 schließt sich der das einsteckseitige Stirnende überragende Schließabschnitt 17 des Schlüsselblattes 16 an. In diesem Schließabschnitt 17 befinden sich Schließkerben 18 zum Einordnen von Zuhaltungen eines Schlosses.

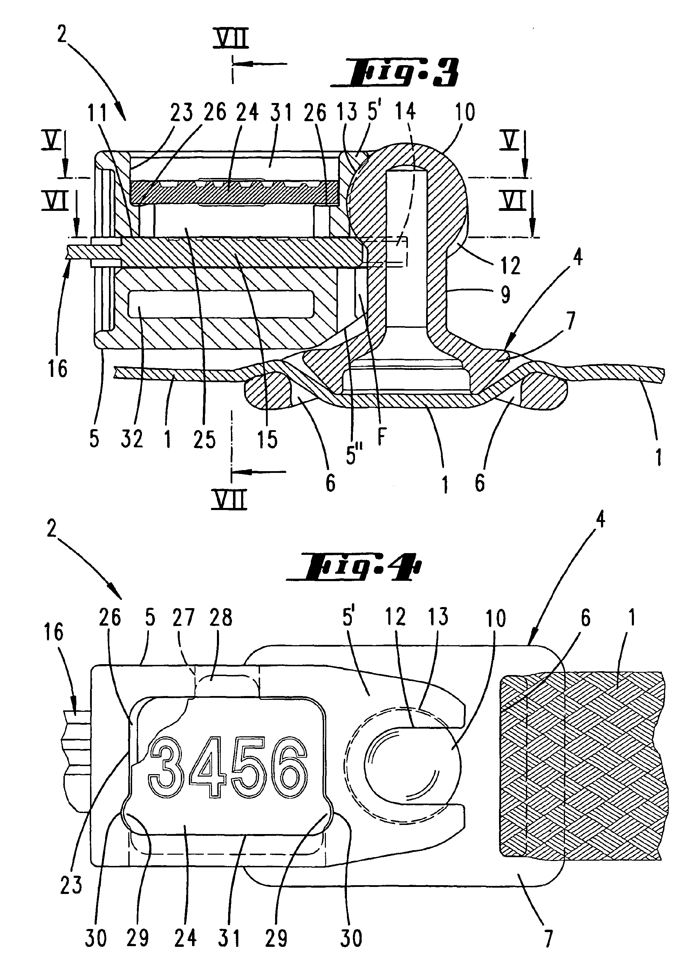

In eingeschobenem Zustand des Befestigungsabschnittes 15 untergreift eine als Kehle gestaltete U-Öffnung 19 den Kugelkopf 10. Ferner umfasst die U-Öffnung 19 teilweise den Verbindungssteg 9. Dadurch kann der Verbindungssteg 9 mit dem Kugelkopf 10 auch in die Stellung gemäß Fig. 2 und 3 geschwenkt werden, in welcher eine dichte Anlage des Schlüsselblattes 16 und des Griffstückes 5 zum Halteband 1 ermöglicht ist. Ein gewisses Bewegungsspiel zwischen der U-Öffnung 19 und dem Verbindungssteg 9 gestattet eine geringfügige Kippverlagerung in Seitenrichtung. In der in Fig. 3 veranschaulichten Schnittebene kann jedoch das Griffstück 5 mit dem Schlüsselblatt 16 bis in die gegenüberliegende Endstellung geschwenkt werden. In den Zwischenstellungen erlaubt das Kugelgelenk 10, 13 ein Verdrehen des Griffstückes 5 um seine Längsachse, so dass weitgehend der Schlüssel alle Positionen zum Verbindungsstück 4 einnehmen kann. Zur Optimierung der Beweglichkeit ist der der Kugelpfanne 13 gegenüberliegende Bereich der Gabelschenkel mit einer Abschrägung 5" versehen.

Um ein unbefugtes Herausziehen des Befestigungsabschnittes 15 aus dem Einsteckschacht 11 zu verhindern, sind an den Befestigungsabschnitt-Schmalseiten hakenförmige Rastmittel angeformt. Diese wirken zusammen mit Gegenrastmitteln 21 der zugeordneten Wand des Einsteckschachtes 11. Beim Ausführungsbeispiel handelt es sich bei den Gegenrastmitteln 21 um fensterförmige Öffnungen, in welche die hakenförmigen Rastmittel 20 eingreifen und sich nach Einschieben des Befestigungsabschnittes 15 abzugsverhindernd vor die Öffnungskanten 21' der Gegenrastmittel 21 legen, vergl. Fig. 6. Um eine Verlagerung des Befestigungsabschnittes 15 in Einsteckrichtung zu begrenzen, bildet der Einsteckschacht 11 im Bereich der Gabelöffnung 12 quer zur Einsteckrichtung verlaufende Anschläge 22, die mit dem zugekehrten Stirnende des Befestigungsabschnittes 15 zusammenwirken.

Parallel beabstandet zum Einsteckschacht 11 bildet das Griffstück 5 eine fensterförmige Einfügeöffnung 23 aus. Diese dient zum formschlüssigen Einschub einer Kennzeichnungsplatte 24. Letztere verschließt ein Sichtfenster 25 zur Breitfläche des Befestigungsabschnittes 15. Das Sichtfenster 25 ist so dimensioniert, dass quer zur Einschubrichtung des Befestigungsabschnittes 15 Auflagestege 26 verbleiben, die beim Einschieben der Kennzeichnungsplatte 24 diese an den Seitenrändern stützen. Die Einschubrichtung der Kennzeichnungsplatte 24 verläuft quergerichtet zur Einsteckrichtung des Schlüsselblattes 16. Die Einfügeöffnung 23 ist jedoch nur zur einen Griffstückfläche hin offen. Zur anderen Seite hin ist nur eine schmalere Einschuböffnung 27 vorgesehen. In diese greift bei eingesteckter Kennzeichnungsplatte 24 eine am einschubseitigen Stirnende befindliche Zunge 28 ein. Um die Kennzeichnungsplatte 24 in der Einschubstellung sicher zu fixieren, gehen von den in Einschubrichtung verlaufenden Schmalflanken Rastmittel 29 in Form von gerundet verlaufenden Überständen aus, welche Rastmittel 29 in Gegenrastmittel 30 des Griffstücks 5 eingreifen. Diese sind kehlenförmig gestaltet und nehmen formschlüssig die Rastmittel 29 auf. Die Verrastung ist derart, dass unbefugte Manipulationen verhindert sind, um bspw. die Kennzeichnungsplatte 24 zu entnehmen.

Oberhalb der Einfügeöffnung 23 befindet sich am Griffstück 5 ein Kennzeichnungsfenster 31. Durch dieses kann der Benutzer das nummernartige Kennzeichen erkennen, um bspw. das zugehörige Schließfach zu benutzen, in dessen Schloss der Schlüssel passt.

Auch der Einsteckabschnitt 15 kann eine ziffernartige Kennzeichnung enthalten, die bspw. Aufschluss über die Schließung des Schlüssels 2 gibt. Dieses Kennzeichen ist jedoch erst nach Entnehmen der Kennzeichnungsplatte 24 erkennbar, und zwar durch das Kennzeichnungsfenster 31, die Einfügeöffnung 23 und das Sichtfenster 25.

Die Montage des Schlüssels 2 geschieht in der Weise, dass zunächst der Kugelkopf 10 des Verbindungssteges 9 in die Kugelpfanne 13 eingeführt wird, so dass dann die Stellung gemäß Fig. 3 vorliegt. Zur Formschlusssicherung wird sodann das Schlüsselblatt 16 mit seinem Einsteckabschnitt 15 voran in den Einsteckschacht 11 eingeschoben, bis die U-Öffnung 19 randmäßig den Kugelkopf 10 untergreift und teilweise den Verbindungssteg 9 umfasst. Dann kann der Verbindungssteg 9 mit seinem Kugelkopf 10 nicht mehr aus der Kugelpfanne 13 entnommen werden. Es ist lediglich möglich, Griffstück 5 und Verbindungsstück 4 relativ zueinander zu verschwenken und zu verdrehen.

In Gegenüberlage zum Sichtfenster 25 ist im Griffstück 5 ein Durchzugsfenster 32 vorhanden. Dieses kann vom Halteband 1 durchsetzt werden, wenn auf ein Kugelgelenk verzichtet wird.

Eine Abwandlung des Verbindungsstückes 4' geht aus Fig. 8 und 9 hervor. Dort ist der den Kugelkopf 10 ausbildende Verbindungssteg 9 einem ringförmigen Befestigungsauge 33 angeformt. Durch die Augenöffnung 34 kann ebenfalls ein Halteband durchgezogen werden, welches dann bevorzugt als Halsband zu tragen ist.

Um bspw. in einer Badeanstalt eine größere Anzahl von Schlüsseln mit unterschiedlichen Kennzeichnungsplatten 24 auszustatten, ist ein von einem Rahmen 35 gehaltener Satz von durchnummerierten Kennzeichnungsplatten 24 angeordnet. Der Rahmen 35 bildet mehrere Zwischenschenkel 36 aus. Letztere und die beiden äußeren, parallel dazu verlaufenden Rahmenschenkel dienen zur Halterung der reihenförmig hintereinander angeordneten Kennzeichnungsplatten 24. Jede Kennzeichnungsplatte 24 ist über Abrissstege 37 mit den Zwischenschenkeln 36 und Rahmenschenkeln verbunden. Die Abrissstege 37 haben dabei eine geringere Dicke als der Rahmen 35 bzw. die Kennzeichnungsplatten 24. Während die Dicke des Rahmens 35 geringfügig größer ist als die Dicke der Kennzeichnungsplatten 24, ist die Dicke der Kennzeichnungsplatten 24 größer als die Dicke der Abrissstege 37, so dass ein Verdrehen der Kennzeichnungsplatten 24 relativ zum Rahmen 35 zu einem Zertrennen der Abrissstege 37 führt.

Dieser Rahmen 35 mit den Zwischenschenkeln 36 und den Kennzeichnungsplatten 24 plus Abrissstegen 37 kann im Kunststoff-Spritzverfahren erzeugt werden.

## Patentansprüche

1. An einem Halteband (1) oder dergleichen befestigbarer Schlüssel (2), welcher Schlüssel (2) ein Griffstück (5) aufweist, welches Griffstück (5) über einen Verbindungssteg (9) dreh- und schwenkbar an einem Verbindungsstück (4, 4') zum Halteband (1) angelenkt ist, **dadurch gekennzeichnet, dass** der Verbindungssteg (9) endseitig als Kugelkopf (10) ausgebildet ist, der formschlüssig in einer vom Griffstück (5) gebildeten Kugelpfanne (13) einliegt.

2. Schlüssel nach Anspruch 1, **dadurch gekennzeichnet, dass** der Formschluss über ein in einen Einsteckfreiraum (F) der Kugelpfanne (13) verlagerbares Verriegelungselement (14) erzielt ist.

3. Schlüssel nach Anspruch 2, **dadurch gekennzeichnet, dass** das Verriegelungselement (14) eine den Kugelkopf (10) untergreifende, den Verbindungssteg (9) bei der Schwenkbetätigung aufnehmende, insbesondere als Kehle gestaltete U-Öffnung (19) aufweist.

4. Schlüssel nach Anspruch 2 oder 3, **dadurch gekennzeichnet, dass** das Verriegelungselement (14) ein Schieber ist.

5. Schlüssel nach Anspruch 4, **dadurch gekennzeichnet, dass** der Schieber von einem in einen Einsteckschacht (11) des Griffstückes (5) eingesteckten Befestigungsabschnitt (15) des Schlüsselblattes (16) ausgebildet ist.

6. Schlüssel nach Anspruch 5, **gekennzeichnet durch** von der Befestigungsabschnitt-Schmalseite und der zugeordneten Wand des Einsteckschachtes (11) ausgebildete Rast- und Gegenrastmittel (20, 21) zur Fesselung des Befestigungsabschnittes (15) im Einsteckschacht (11).

7. Schlüssel nach einem der Ansprüche 2 bis 6, **dadurch gekennzeichnet, dass** die Kugelpfanne (13) von einem gabelförmigen Endabschnitt (5') des Griffstückes (5) gebildet und das Verriegelungselement (14) in die Gabelöffnung (12) hinein verlagerbar ist.

8. Schlüssel nach einem der vorhergehenden Ansprüche, **dadurch gekennzeichnet, dass** das Verbindungsstück (4,4') ein Befestigungsauge (33) oder eine mit Durchzugsöffnungen (6) ausgestattete Schnalle (7) ausbildet.

## Claims

1. A key (2) which can be secured to a retaining strap (1) or the like, which key (2) has a gripping portion (5), which gripping portion (5) is rotatably and pivotably articulated, with respect to the retaining strap (1), on a connecting portion (4, 4') by way of a connecting support (9), **characterised in that** the connecting support (9) is formed at one end as a ball head (10) which is positively enclosed in a ball cup (13) formed by the gripping portion (5).

2. A key according to Claim 1, **characterised in that** the positive engagement is achieved by way of a latching element (14) which can be displaced into an insertion free space (F) in the ball cup (13).

3. A key according to Claim 2, **characterised in that** the latching element (14) has a U-opening (19) which is in particular configured as a channel, engages underneath the ball head (10) and accommodates the connecting support (9) during pivoting actuation.

4. A key according to Claim 2 or 3, **characterised in that** the latching element (14) is a slide.

5. A key according to Claim 4, **characterised in that** the slide is formed by a securing portion (15) of the blade (16) of the key which is inserted into an insertion passage (11) of the gripping portion (5).

6. A key according to Claim 5, **characterised by** latching and counter-latching means (20, 21) for arresting the securing portion (15) in the insertion passage (11), the latching and unlatching means being formed by the narrow side of the securing portion and the associated wall of the insertion passage (11).

7. A key according to any of Claims 2 to 6, **characterised in that** the ball cup (13) is formed by a fork-shaped end portion (5') of the gripping portion (5) and the locking element (14) is displaceable inwards into the fork opening (12).

8. A key according to any of the preceding claims, **characterised in that** the connecting portion (4, 4') forms a securing eye (33) or a buckle (7) equipped with pull-through openings (6).

## Revendications

1. Clé (2) apte à être fixée à une sangle (1) ou analogue, la clé (2) présentant une pièce de saisie (5), la pièce de saisie (5) étant articulée à rotation et à pivotement par l'intermédiaire d'un talon de liaison (9) sur une pièce de liaison (4, 4') par rapport à la sangle (1), **caractérisée en ce que** le talon de liaison (9) est réalisé du côté extrémité sous la forme de tête sphérique (10) s'introduisant, par une liaison à ajustement de forme, dans un logement de rotule (13) formé par la pièce de saisie (5).

2. Clé selon la revendication 1, **caractérisée en ce que** la liaison à ajustement de forme est obtenue par l'intermédiaire d'un élément de verrouillage (14), susceptible d'être déplacé dans un espace libre d'enfichage (F) du logement de rotule (13).

3. Clé selon la revendication 2, **caractérisée en ce que** l'élément de verrouillage (14) présente une ouverture en U (19), en particulier configurée en gorge, saisissant par le dessous la tête de rotule (10) et recevant le talon de liaison (9) lors de l'actionnement par pivotement.

4. Clé selon la revendication 2 ou 3, **caractérisée en ce que** l'élément de verrouillage (14) est un coulisseau.

5. Clé selon la revendication 4, **caractérisée en ce que** le coulisseau est réalisé par un tronçon de fixation (15), enfiché dans un puits d'enfichage (11) de la pièce de saisie (5), de la lame de clé (16).

6. Clé selon la revendication 5, **caractérisée par** des moyens de verrouillage et de contre-verrouillage (20, 21) réalisés par le côté étroit du tronçon de fixation et la paroi associée du puits d'enfichage (11), afin de produire le verrouillage captif du tronçon de fixation (15) dans le puits d'enfichage (11).

7. Clé selon l'une des revendications 2 à 6, **caractérisée en ce que** le logement de rotule (13) est formé par un tronçon d'extrémité (5') en forme de fourche de la pièce de saisie (5), et l'élément de verrouillage (14) est déplaçable dans l'ouverture de fourche (12).

8. Clé selon l'une des revendications précédentes, **caractérisée en ce que** la pièce de liaison (4, 4') constitue un oeillet de fixation (33), ou une boucle (7) équipée d'ouvertures de passage (6).
